Europäisches Patentamt

European Patent Office

Office européen des brevets

(19)

(11) Numéro de publication: **0 503 364 B1**

(12) **FASCICULE DE BREVET EUROPEEN**

(45) Date de publication de fascicule du brevet: **14.06.95**　(51) Int. Cl.⁶: **B29C 47/94**, B29C 47/20

(21) Numéro de dépôt: **92103220.7**

(22) Date de dépôt: **26.02.92**

(54) **Procédé de fabrication des tubes en matériaux thermoplastiques renforcés par des fibres à orientation contrôlée et appareillage pour sa mise en oeuvre.**

(30) Priorité: **07.03.91 FR 9102894**

(43) Date de publication de la demande:
**16.09.92 Bulletin 92/38**

(45) Mention de la délivrance du brevet:
**14.06.95 Bulletin 95/24**

(84) Etats contractants désignés:
**BE CH DE ES GB IT LI NL**

(56) Documents cités:
EP-A- 0 001 874　　EP-A- 0 113 117
EP-A- 0 143 863　　WO-A-84/03858
US-A- 4 056 591　　US-A- 4 883 622

SOVIET INVENTIONS ILLUSTRATED Section
Ch, Week 9125, 7 Août 1991 DerwentPublications Ltd., London, GB; Class A, AN
91-183765/25

SOVIET INVENTIONS ILLUSTRATED Section
Ch, Week 2281, 8 Juillet 1981 DerwentPublications Ltd., London, GB; Class A, AN
39621D/22

PATENT ABSTRACTS OF JAPAN vol. 11, no.
172 (M-595)(2619) 3 Juin 1987

(73) Titulaire: **INSTITUT FRANCAIS DU PETROLE**
**4, avenue de Bois Préau**
**F-92502 Rueil-Malmaison (FR)**

(72) Inventeur: **Jarrin, Jacques**
**5, rue de Stalingrad**
**F-92000 Nanterre (FR)**
Inventeur: **Ausias, Gilles**
**70 chemin de Saint-Béchaire**
**F-06600 Antibes (FR)**
Inventeur: **Vincent, Michel**
**L'Aurée du Bois,**
**Entrée A, avenue du Bousquet**
**F-06270 Villeneuve Loubet (FR)**
Inventeur: **Vinciguerra, Emmanuel**
**81, bis rue Garches**
**F-92000 Nanterre (FR)**
Inventeur: **Dawans, François**
**Résidence "la Feuilleraie",**
**1, rue Louis Pasteur**
**F-78380 Bougival (FR)**

Rank Xerox (UK) Business Services
(3.10/3.09/3.3.3)

EP 0 503 364 B1

**Description**

L'invention concerne le domaine technique des tubes en polymères thermoplastiques renforcés par des fibres discontinues, obtenus par extrusion.

L'invention est relative à un procédé permettant d'orienter les fibres perpendiculairement à l'axe du tube dans le plan de la paroi du tube et d'améliorer très sensiblement les propriétés mécaniques des tubes ainsi préparés. Elle est également relative à un appareillage utilisable dans un tel procédé et aux tubes réalisés par la mise en oeuvre de celui-ci.

L'amélioration de la tenue mécanique des tubes fabriqués par extrusion de matériau plastiques est un souci constant des fabricants et des utilisateurs de ces tubes, qui sont principalement caractérisés par leur résistance à l'éclatement et leur tenue au fluage sous pression interne.

En première approximation, les contraintes générées dans un tube d'epaisseur faible par rapport au rayon sous une pression interne P sont données par les relations :

$$\sigma_L = \frac{PR}{2e}$$
$$\sigma_R = \frac{PR}{'e}$$

avec

$\sigma_L$:    contrainte dans le sens longitudinal

$\sigma_R$:    contrainte dans le sens radial

e :    épaisseur de la paroi du tube

R :    rayon moyen du tube

La sollicitation est environ 2 fois plus importante dans le sens radial que dans le sens longitudinal.

Pour un matériau homogène et isotrope (c'est à dire dont les propriétés mécaniques sont indépendantes de la direction de la sollicitation) sous forme de tube soumis à une pression interne P, la rupture se produira par gonflement et éclatement du tube avec une fissure se propageant dans le sens longitudinal.

L'extrusion simple de matériaux plastiques renforcés par des fibres de verre courtes n'améliore en rien les performances des tubes ainsi fabriqués. En effet, il est bien connu que les fibres ont alors tendance à s'orienter dans le sens de l'écoulement et l'effet de renforcement est alors surtout sensible dans le sens longitudinal, qui est le moins sollicité, alors que dans le sens radial les propriétés mécaniques du matériau ne sont que relativement peu améliorées.

La nécessité d'orienter principalement les fibres dans le sens circonférentiel à souvent conduit les fabricants de tubes à utiliser des fibres continues rapportées sur le tube préalablement extrudé, par exemple par bobinage. On connait par exemple le brevet BE-A-684.102, dans lequel on dispose par bobinage un ruban de fibres continues sur un tube préalablement extrudé et on recouvre ce ruban d'une seconde couche plastique déposée par extrusion en tête d'équerre. On connait également le brevet GB-A-1.052.884, dans lequel, toujours sur un tube préalablement extrudé, on dispose une tresse tubulaire en fibre de renfort et on recouvre cette tresse d'une seconde couche plastique par extrusion en tête d'équerre. Ces techniques, qui permettent effectivement d'obtenir un renfort des tubes, restent cependant lourdes à mettre en oeuvre, car elles nécessitent deux extrudeuses, dont une équipée en tête d'équerre, une bobineuse ou une tresseuse et des dispositifs de maintien du tube interne support pendant l'opération de tressage ou de bobinage, qui peuvent être relativement complexes, pour assurer une bonne adhérence des différentes couches plastiques entres elles.

On connait également le brevet US-A-3.508.297 qui décrit le passage direct d'une tresse tubulaire dans une filière d'extrusion en tête d'équerre et l'enrobage de cette tresse par la couche plastique pour former un tube renforcé. Ce dispositif reste délicat à mettre en oeuvre, principalement parce qu'il nécessite un outillage très spécifique permettant le passage du tube tressé dans la filière tout en assurant une étanchéité à la matière plastique fondue et sous pression se trouvant dans la filière. De plus, des dispositifs de fabrication, d'alimentation et de maintien du tube tressé sont nécessaires en amont de l'extrudeuse.

Ce type de procédé nécessite toujours des équipements et des investissements complémentaires liés à la manipulation des fibres continues de renfort et à la nécessité d'avoir une bonne adhérence entre les différentes couches déposées à des stades différents du procédé.

Ces inconvénients n'existent pas si l'on utilise des fibres discontinues pour renforcer la matière plastique.

En effet, les matériaux renforcés par des fibres discontinues sont extrudables sans difficultés majeures et le brevet GB-A-2.182.603 décrit par exemple la fabrication de tubes par extrusion conventionnelle suivie d'une expansion du tube par application d'une pression interne qui vient plaquer le tube sur un conformateur. Le gonflement du tube impose des étirements longitudinaux et radiaux importants, qui peuvent favoriser l'orientation d'une partie des fibres dans le sens circonférentiel, mais s'accompagnent d'une décohésion au niveau de l'interface entre les fibres et la matière polymère à pression atmosphérique.

On connait également le brevet US-A-3.605.189, qui utilise une filière tube de géométrie classique mais équipée d'un mandrin tournant.

Un cisaillement dans le sens radial se superpose donc au cisaillement normal dans le sens de l'écoulement et tend à orienter les fibres au moins en partie dans une direction circonférentielle perpendiculaire à l'axe de l'écoulement. Dans ce cas, l'orientation dépend principalement de l'intensité relative de ces cisaillements. Pour une vitesse de rotation donnée du mandrin, l'effet d'orientation diminue quand on augmente la taux de cisaillement dans le sens longitudinal, par exemple en augmentant le débit à travers la filière.

On connait également le brevet US-A-4.056.591, qui utilise en bout de filière une zone divergente caractérisée par un rapport des surfaces des sections annulaires de sortie et d'entrée supérieur à 2. Dans ce dispositif, la matière en écoulement est sollicitée en cisaillement dans le sens de l'écoulement le long des parois de la filière et en élongation transversale dans le divergent. A l'observation des tubes ainsi fabriqués, on trouve des fibres orientées perpendiculairement à l'écoulement au coeur de l'épaisseur de la paroi, mais longitudinalement en paroi du tube. Les propriétés mécaniques du tube sont insuffisantes.

Une amélioration à ce procédé est décrite dans le brevet US-A-4.883.622 et consiste à séparer physiquement une zone de faible épaisseur en paroi de tube dans laquelle se concentre le cisaillement. Dans cette zone, s'écoule un polymère non chargé, alors que dans la zone centrale s'écoule le polymère chargé auquel s'applique l'élongation transversale, sans cisaillement.

Ce type de dispositif de coextrusion permet d'augmenter la teneur en fibres orientées perpendiculairement à l'écoulement et donc d'augmenter la résistance du tube. Toutefois, si l'on rapporte cette résistance à la quantité de matière par unité d'épaisseur, ce procédé devient moins intéressant du fait que les couches de matière périphériques non chargées ne contribuent pas au renforcement. De plus, le coût élevé des investissements de coextrusion pénalise encore ce procédé.

On a maintenant découvert un nouveau procédé de fabrication de tubes, par extrusion d'un matériau thermoplastique chargé de fibres, qui, associant une formulation judicieuse du matériau et une géométrie de filière particulière, à la fois présente une grande simplicité de fonctionnement, et permet d'améliorer la résistance à l'éclatement des tubes soumis à une pression interne, par orientation des fibres dans une direction circonférentielle, perpendiculaire à l'écoulement.

L'invention porte donc sur un procédé, sur un appareillage et sur les tubes réalisés en mettant en oeuvre ledit procédé.

Ces aspects de l'invention seront décrits ci-après en liaison avec les figures ci-annexées, au nombre desquelles

- la figure 1 représente de façon schématique une coupe longitudinale de la zone terminale d'une filière avec divergent ; elle sert de réfé- rence pour expliciter les divers paramètres caractérisant la géométrie de ladite zone terminale. La figure 1A est une vue en bout de ladite zone, limitée à un quadrant.
- la figure 2 représente une coupe longitudinale de la zone terminale d'une filière avec divergent telle qu'utilisée dans les exemples 1 et 2 (filière n° 1) ;
- la figure 3 représente en coupe un élément divergent de géométrie différente de celui de la filière de la figure 2 ;
- la figure 4 représente une coupe longitudinale d'une filière avec divergent modifiée selon l'invention telle qu'utilisée dans l'exemple 3 (filière n° 2). La figure 4A est une vue dilatée de la partie A de la figure 4.

D'une manière générale, le procédé de l'invention peut être défini comme une procédé de fabrication de tubes par extrusion d'un matériau thermoplastique chargé de fibres comprenant

(a) l'alimentation par un matériau thermoplastique chargé de fibres d'une extrudeuse dont la filière comprend une zone terminale divergente (qui sera dénommée dans la suite : le "divergent"), adaptée sur une filière classique de tube dénommée dans la suite "filière support" ;

(b) le chauffage à une température au moins égale à la température de ramollissement dudit matériau thermoplastique chargé ;

(c) le passage dudit matériau à travers la filière à zone terminale divergente;

ce procédé étant caractérisé en ce que ladite zone terminale comporte un espace d'écoulement annulaire divergent qui présente un rapport $A_s/A_e$ entre son aire de sortie $A_s$ et son aire d'entrée $A_e$ d'au moins 1,2, et un rapport entre la longueur l du bord intérieur de l'espace annulaire de sortie de ladite zone divergente et la largeur e de la section droite dudit espace annulaire inférieur à 5, de préférence inférieur à 1,5, et en ce que l'étape (c) est réalisée en présence d'au moins une substance liquide non compatible avec ledit matériau thermoplastique aux températures mises en jeu au cours de l'extrusion, jouant le rôle de lubrifiant, ledit lubrifiant étant présent au niveau de la paroi extérieure et au niveau de la paroi intérieure dudit espace d'écoulement.

Les matériaux thermoplastiques considérés pour fabriquer les tubes, selon l'invention, peuvent consister par exemple en

des polyéthylènes

des polypropylènes

du poly(chlorure de vinyle)

des polyamides

du poly(téréphtalate de butanediol-1,4)

du poly(téréphtalate d'éthylèneglycol)

du poly(fluorure de vinylidène)

ou en divers caoutchoucs.

Selon le matériau thermoplastique utilisé, la température d'extrusion pourra être par exemple de 160 à 280°C.

Par ailleurs, les fibres constituant la charge renforçante du matériau thermoplastique peuvent constituer par exemple en des fibres de verre, de polyamides aromatiques tels que le Kevlar (marque déposée), de carbone, de bore, ou de matériau céramique. On utilise le plus souvent des fibres de verre. Les fibres ont en général une longueur d'au plus 1cm et leur rapport longueur/diamètre est d'au moins 10. Elles sont incorporées au matériau thermoplastique en général en une proportion de 5 à 40 % en poids, plus particulièrement de 20 à 30 % en poids.

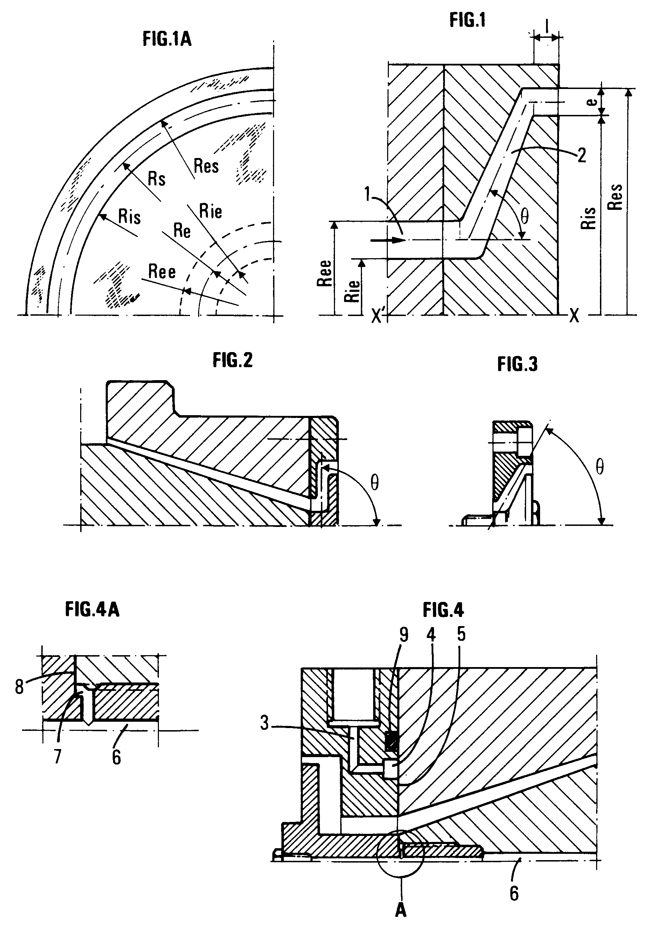

Si l'on se référe aux figures 1 et 1A, on voit que l'aire d'entrée $A_e$ du divergent adapté à la filière est l'aire de la section annulaire ayant pour rayon intérieur $R_{ie}$ et pour rayon extérieur $R_{ee}$ ; est donc de $(R^2_{ee} - R^2_{ie})$. De même, l'aire de sortie $A_s$ du divergent est l'aire de la section annulaire ayant pour rayon intérieur $R_{is}$ et pour rayon extérieur $R_{es}$ ; elle est donc de $(R^2_{es} - R^2_{is})$. Le rapport $A_s/A_e$ est d'au moins 1,2.

On peut également prendre en compte la grandeur caractéristique de la géométrie du divergent définie par

$$\sqrt{\frac{As}{Ae} + \frac{Rs}{Re}\left(\frac{As}{Ae} - 1\right)}$$

où $A_s$ et $A_e$ sont définis comme précédemment et $R_s$ et $R_e$ représentent respectivement le rayon moyen de sortie et le rayon moyen d'entrée du divergent. Cette grandeur est avantageusement d'au moins 1,5.

Selon un mode de réalisation préféré de l'invention, l'élément divergent adapté à la filière de l'extrudeuse peut présenter les caractéristiques particulières indiquées ci-après en liaison avec les figures 1 et 1A :

.   Le rapport entre le rayon intérieur $R_{is}$ de la section de sortie du divergent et le rayon extérieur $R_{ee}$ de la section d'entrée dudit divergent est d'au moins 1.

.   L'angle $\theta$ formé par la direction de l'axe de la filière avec la direction 2 d'écoulement du matériau dans la zone divergente est d'au moins 60°. Cet angle peut aller jusqu'à 90°. Dans le cas des éléments divergents représentés sur les figures 2 et 4, l'angle $\theta$ est de 90° et dans le cas de l'élément divergent de la figure 3, l'angle $\theta$ est de 65°.

A l'interface entre le polymère chargé de fibres et la paroi métallique de la filière divergente, on introduit une substance liquide, de faible viscosité et non compatible avec ledit polymère aux températures d'extrusion du polymère. Cette substance, agissant comme lubrifiant, peut être introduite par exemple en une proportion de 0,01 à 2,5 cm³ pour 100 g du polymère à extruder.

Le composé lubrifiant liquide est caractérisé par exemple par une viscosité 50 fois inférieure à celle du polymère chargé et par un paramètre de solubilité respectivement inférieur au paramètre de solubilité du polymère -4 ou supérieur au paramètre de solubilité du polymère +4. Il peut consister notament en un polyethylène glycol de masse moléculaire moyenne de 400 à 10 000.

Selon une première variante du procédé de l'invention , le composé lubrifiant peut être introduit directement avec le polymère chargé par exemple sous forme de granulés dans la trémie d'alimentation de l'extrudeuse. Il convient alors de s'assurer que sa répartition à la surface des granulés est homogène pour éviter des accumulations de ce composé dans certains points de l'extrudeuse.

4

Selon une seconde variante de l'invention on utilise un appareillage modifié, qui permet l'introduction du composé lubrifiant à la jonction entre la filière support et la zone divergente. Cet appareillage constitue un objet de l'invention. Il est décrit ci-après en relation avec les figures 4 et 4A annexées.

L'élément divergent mis en oeuvre dans cet appareillage présente les caractéristiques géométriques définies plus haut dans la description du procédé de l'invention, à savoir un rapport entre l'aire $A_e$ de la section annulaire d'entrée de l'espace d'écoulement et l'aire $A_s$ de la section annulaire de sortie dudit espace d'écoulement d'au moins 1,2 et un rapport entre la longueur l du bord intérieur de l'espace annulaire de sortie de la zone divergente et la largeur e de la section droite dudit espace de sortie inférieur à 5, de préférence inférieur à 1,5.

En outre, la paroi extérieure de l'espace d'écoulement du matériau thermoplastique présente un perçage d'alimentation en composé lubrifiant 3, relié à un canal de répartition 4, qui comporte une fuite 5 débouchant sur ladite paroi extérieure.

Comme perçage d'alimentation de la paroi intérieure, on utilise le canal 6 existant sur les filières classiques et qui sert à maintenir l'intérieur des tubes extrudés à la pression atmosphérique. Comme on le voit sur la figure 4A, ce canal 6 est connecté au canal de répartition 7 qui comporte une fuite 8 débouchant sur ladite paroi intérieure. Par ailleurs, le canal 6 débouche à l'extérieur à travers les ailettes de maintien du mandrin. Cette dernière partie de la filière n'est pas représentée sur la figure 4.

Pour assurer l'étanchéité de l'ensemble filière + divergent, notamment pour éviter les fuites de lubrifiant vers l'extérieur de l'appareillage, on dispose en général un joint annulaire 9 entre la filière support et le divergent, à une distance par rapport à l'axe de la filière supérieure à la distance à laquelle se trouve le canal de répartition 4.

L'alimentation et le débit régulier en lubrifiant sont assurés par une ou plusieurs pompes, de préférence à débit imposé (pompes a engrenages).

Lorsqu'on utilise le dispositif décrit ci-dessus, il convient d'éviter les remontées de polymères dans les fuites 5 et 8 permettant d'alimenter les parois de la filière en lubrifiant. On peut régler l'épaisseur des zones de fuite en jouant sur le serrage de la zone divergente sur la filière support.

L'épaisseur des fuites sera de l'ordre de 0,1 mm environ et, au démarrage de l'installation, il convient d'alimenter la zone divergente d'abord en lubrifiant avant que le matériau chargé à extruder ne commence à s'écouler.

Le débit de lubrifiant est alors réglé en fonction du débit de matériau thermoplastique à extruder de telle façon que la quantité de lubrifiant introduite soit de 0,01 à 2,5 $cm^3$ pour 100 g de matériau thermoplastique à extruder.

Que l'on incorpore directement le lubrifiant au matériau à extruder lors de son introduction dans la trémie d'alimentation de l'extrudeuse, ou que l'on utilise un appareillage modifié pour l'introduction de lubrifiant à la jonction entre la filière-support et l'élément divergent, la proportion du lubrifiant introduit restera avantageusement relativement faible, par exemple inférieure à 1,5 $cm^3$ pour 100 g de matériau thermoplastique à extruder. En effet, avec des proportions croissantes de lubrifiant, on peut rencontrer des instabilités d'écoulement liées à l'immiscibilité du lubrifiant et du matériau polymère, plus particulièrement à la grande différence de viscosité entre eux ; ces instabilités se traduisent par des flux préférentiels ou saccadés du lubrifiant et du polymère.

Un avantage du procédé de l'invention concerne l'état de surface des tubes extrudés qui se trouve, de façon surprenante, considérablement amélioré par la mise en oeuvre de ce procédé.

En effet, un polymère chargé de fibres, extrudé sous forme de tube présente généralement une surface très rugueuse, avec dans certains cas des affleurements de fibres en surface.

Par ailleurs, les techniques telles que le surfaçage de la zone divergente ou le traitement de surface de celle-ci pour améliorer le glissement du matériau fondu ne sont efficaces que très peu de temps, en raison du caractère abrasif des fibres, qui dégradent ou même détruisent les surfaces ainsi préparées.

Le polymère chargé de fibres extrudé dans les conditions caractérisant le procédé de l'invention présente une surface parfaitement lisse, du type de celles que l'on obtient en extrudant un polymère non chargé.

L'introduction du lubrifiant semble donc favoriser l'apparition en paroi des tubes d'une couche continue de polymère non chargé qui présente l'avantage d'isoler les fibres de verre et les interfaces verre-polymère du contact direct avec les fluides environnant le tuyau en usage et donc d'assurer une meilleure pérennité de celui-ci.

Les exemples suivants illustrent l'invention.

### EXEMPLE 1

Dans les essais 1 et 2, on utilise une extrudeuse TROESTER monovis de diamètre de vis 45 mm et de longueur 25 D, équipée d'une filière-tube à laquelle on a adapté un divergent tel que représenté sur la figure 2 et ayant les caractéristiques géométriques suivantes :

. en entrée

$$R_{ie} \quad : \quad 0,5 \text{ cm}$$
$$R_{ee} \quad : \quad 0,9 \text{ cm} \qquad \Big\} \qquad A_e = 1,759 \text{ cm}^2$$
$$R_e (\text{moyen}) : \quad 0,7 \text{ cm}$$

. en sortie

$$R_{is} \quad : \quad 2,0 \text{ cm}$$
$$R_{es} \quad : \quad 2,2 \text{ cm} \qquad \Big\} \qquad A_s = 2,638 \text{ cm}^2$$
$$R_s (\text{moyen}) : \quad 2,1 \text{ cm}$$

$$\frac{As}{Ae} = 1,499 \qquad \sqrt{\frac{As}{Ae} + \frac{Rs}{Re}\left(\frac{As}{Ae} - 1\right)} = 1,730$$

$$\text{angle } \theta = 90°$$

Cette filière sera désignée par filière divergente n°1.

Dans les essais 3 et 4, on utilise la même extrudeuse mais équipée d'une filière de tube traditionnelle.

Dans l'essai 5, on utilise la filière n°1 dont on a retiré l'élément divergent. La conformation du tube est alors assurée par une pression appliquée à l'intérieur du tube qui le dilate et le plaque sur les parois du conformateur sous vide, assurant le refroidissement de la matière.

Dans les essais 1, 3 et 5, on extrude à 210°C un polypropylène chargé à 30 % en poids de fibres de verre discontinues.

Ce polypropylène a une densité de 1,14 et un indice de fluidité, mesuré suivant la norme ASTM D-1238, de 4g/10 min sous 5 Kg. Il est commercialisé par la Société HOECHST sous la référence HOSTALEN PPN 7790 GV 2/30.

Dans les essais 2 et 4, on extrude le même polypropylène dans lequel on a incorporé, dans un mélangeur à fût, 0,5 cm³ de polyéthylèneglycol de masse 6000 et de température de fusion 45°C pour 100g de polypropylene chargé.

Dans le tableau 1 qui suit on a indiqué pour chacun des essais 1 à 5, les conditions de l'extrusion et les caractéristiques, notamment les propriétés mécaniques, des tubes réalisés.

Dans ce tableau, $\sigma_R$, exprimé en MPa, est la résistance du matériau dans le sens radial, calculée à partir de la pression d'éclatement mesurée, du rayon moyen $R_s$ et de l'épaisseur e du tube sur la ligne de propagation de la fracture par la relation :

$$\sigma_R = \frac{Pc \times Rs}{e}$$

6

## Tableau 1

| ESSAI | 1 | 2 | 3 | 4 | 5 |
|---|---|---|---|---|---|
| Filière | n°1 | n°1 | Filière - tube | Filière - tube | Filière sans divergent + gonflage |
| PEG 6000 (%) | 0 | 0,5 | 0 | 0,5 | 0 |
| **Conditions d'extrusion** — vitesse vis (tours/mn) | 10 | 10 | 10 | 10 | 10 |
| pression (bars) | 35 | 32 | 23 | 22 | 33 |
| température (°C) | 210 | 210 | 210 | 210 | 210 |
| débit (g/mn) | 109 | 113 | 94 | 94 | 98 |
| vitesse de tirage (cm/s) | 0,47 | 0,50 | 0,48 | 0,50 | 0,47 |
| **Caractéristiques des tubes** — épaisseur (mm) | 2,0 | 1,7 | 2,5 | 2,6 | 2,3 |
| pression d'éclatement (bars) | 62 | 55 | 25 | 48 | 20 |
| $\sigma_R$ (MPa) | 62 | 64,7 | 20 | 36,9 | 23 |
| aspect des surfaces | mauvais | bon | mauvais | bon | mauvais |

Dans un but de comparaison, on a également déterminé la résistance à la traction d'éprouvettes prélevées dans le sens longitudinal sur le tube de l'essai 3, pour lequel les fibres sont orientées dans le sens longitudinal. Elle est de 70 MPa. Cette valeur constitue le maximum accessible avec ce matériau.

Au vu du tableau 1, il apparait clairement que l'association d'une filière divergente et de l'utilisation d'un lubrifiant incompatible avec le polymère chargé (essai 2) permet d'obtenir une valeur de contrainte circonférentielle très proche de ce maximum. On observe en outre un bon aspect des surfaces du tube.

## EXEMPLE 2

Dans cet exemple, en utilisant une extrudeuse équipée d'une filière avec divergent n°1 déjà décrite dans l'exemple 1, on extrude le même polypropylène chargé de fibres de verre que précedemment, mais auquel on a préalablement incorporé différentes proportions de polyéthylèneglycol 6000.

Les conditions et résultats des différents essais sont indiqués dans le tableau 2 , dans lequel on a rappelé les essais 1 et 2 de l'exemple 1.

Les résultats figurant dans le tableau 2 montrent que pour une teneur relativement élevée en lubrifiant (2cm$^3$/100g), les propriétés mécaniques du tube sont moins bonnes, en raison de problèmes d'écoulement.

### Tableau 2

| | ESSAI | 1 | 2 | 6 | 8 |
|---|---|---|---|---|---|
| | Filière | n°1 | n°1 | n°1 | n°1 |
| | PEG 6000 (cm$^3$/ 100g ) | 0 | 0,5 | 1 | 2 |
| Conditions de l'extrusion | vitesse vis (tours/mn) | 10 | 10 | 10 | 10 |
| | pression (bars) | 35 | 32 | 28 | 24 |
| | température (°C) | 210 | 210 | 210 | 210 |
| | débit (g/mn) | 109 | 113 | 77 | 84 |
| | vitesse de tirage (cm/s) | 0,47 | 0,50 | 0,52 | 0,52 |
| Caractéristiques des tubes | épaisseur (mm) | 2,0 | 1,7 | 1,7 | 1,8 |
| | pression d' éclatement (bars) | 62 | 55 | 46 | 39 |
| | $\sigma_R$ (MPa) circonférentiel | 62 | 64,7 | 54,1 | 41,1 |
| | aspect des surfaces | mauvais | bon | bon | mauvais |

8

## EXEMPLE 3

Dans cet exemple, l'extrudeuse est équipée d'une filière divergente modifiée, telle que représentée sur les figures 4 et A4 (filière n°2). Ses caractéristiques géométriques sont les suivantes :

. en entrée

$$R_{ie} \quad : 0,5 \text{ cm}$$
$$R_{ee} \quad : 0,9 \text{ cm}$$
$$R_e \text{ moyen} \quad : 0,7 \text{ cm}$$

$$A_e = 1,759 \text{ cm}^2$$

. en sortie

$$R_{is} \quad : 1,8 \text{ cm}$$
$$R_{es} \quad : 2,2 \text{ cm}$$
$$R_s \text{ moyen} \quad : 2,0 \text{ cm}$$

$$A_s = 5,026 \text{ cm}^2$$

$$\frac{As}{Ae} = 2,857 \qquad \sqrt{\frac{As}{Ae} + \frac{Rs}{Re}\left(\frac{As}{Ae} - 1\right)} = 2,857$$

$$\text{Angle } \theta = 90°$$

Le matériau à extruder est le même polypropylène charge de fibres de verre que dans les exemples 1 et 2. Son débit dans la filière peut être réglé par la vitesse de rotation de la vis de l'extrudeuse.

La filière divergente est alimentée en lubrifiant (polyéthylène glycol de masse moléculaire moyenne 400) par une pompe à engrenage FEINPRUF (marque déposée) assurant, suivant les essais, un débit de 0,1 à 2,5 cm$^3$ pour 100 g de polymère. L'essai 9 est réalisé sans lubrifiant.

Tableau 3

| ESSAI | 9 | 10 | 11 | 12 | 13 | 14 | 15 | 16 | 17 |
|---|---|---|---|---|---|---|---|---|---|
| Conditions d'extrusion | | | | | | | | | |
| vitesse vis (tours/mn) | 10 | 10 | 10 | 10 | 10 | 10 | 20 | 40 | 50 |
| pression (bars) | 31 | 30 | 29 | 30 | 28 | 31 | 29 | 42 | 49 |
| température (°C) | 200 | 200 | 200 | 200 | 200 | 200 | 200 | 200 | 200 |
| débit polymère (g/mn) | 95 | 105,5 | 110,5 | 108,5 | 109 | 111,3 | 211,5 | 295 | 343 |
| débit lubrifiant (cm³/mn) | 0 | 0,1 | 1 | 1,5 | 2 | 2,5 | 2,5 | 2,5 | 2,5 |
| débit relatif (cm³/100g) | 0 | 0,10 | 0,90 | 1,38 | 1,83 | 2,25 | 1,18 | 0,85 | 0,73 |
| vitesse de tirage (cm/s) | 0,7 | 0,5 | 0,5 | 0,5 | 0,5 | 0,5 | 0,93 | 1,40 | 1,75 |
| Caractéristiques des tubes | | | | | | | | | |
| épaisseur (mm) | 1,6 | 2,3 | 2,1 | 2,4 | 2,6 | 2,6 | 2,5 | 2,3 | 2,4 |
| pression d'éclatement (bars) | 30 | 61 | 55 | 54 | 55 | 49 | 54 | 52 | 48 |
| $\sigma_R$ circonférentiel (MPa) | 37,5 | 53 | 52,4 | 45 | 42,3 | 37,7 | 43,2 | 45,2 | 40 |

Les conditions de l'extrusion et les caractéristiques des tubes obtenus sont indiquées dans le tableau 3 ci-avant.

Le tableau 3 montre de bonnes propriétés mécaniques pour les essais 10 à 12. Celle-ci vont en se dégradant à mesure que le débit de lubrifiant s'accroît à partir de 2 cm³/mn, pour un débit de polymère pratiquement constant (voisin de 110 g/mn), dans les essais 13 et 14. Cette dégradation des propriétés

10

mécaniques est dûe aux instabilités d'écoulement respectives du polymère et du lubrifiant. Les difficultés s'atténuent lorsqu'on diminue le débit relatif de lubrifiant par rapport au polymère, par exemple en augmentant le débit du polymère dans les essais 15 à 17, dans lesquels la contrainte circonférentielle prend à nouveau des valeurs satisfaisantes.

**Revendications**

1. Procédé de fabrication de tubes par extrusion d'un matériau thermoplastique chargé de fibres discontinues à travers une filière comprenant une zone terminale divergente, caractérisé en ce que ladite zone terminale comporte un espace d'écoulement annulaire divergent qui présente un rapport As/Ae d'au moins 1,2 entre son aire de sortie $A_s$ et son aire d'entrée $A_e$, et un rapport entre la longueur l du bord intérieur de l'espace annulaire de sortie de la zone divergente et la largeur e de la section droite dudit espace inférieur à 5, et en ce que le passage dudit matériau thermoplastique à travers ladite zone terminale divergente est réalisé en présence d'au moins un lubrifiant consistant en une substance liquide, de faible viscosité et non compatible avec ledit matériau thermoplastique aux températures mises en jeu au cours de l'extrusion, ledit lubrifiant étant présent au niveau de la paroi extérieure et au niveau de la paroi intérieure dudit espace d'écoulement.

2. Procédé selon la revendication 1, dans lequel ledit matériau thermoplastique est choisi dans le groupe formé par les polyéthylènes, les polypropylènes, le poly(chlorure de vinyle), les polyamides, le poly-(téréphtalate de butanediol-1,4), le poly(téréphtalate d'éthylèneglycol), le poly(fluorure de vinylidène) et les caoutchoucs.

3. Procédé selon l'une des revendications 1 et 2, dans lequel les fibres sont choisies dans le groupe formé par les fibres de verre, de polyamides aromatiques, de carbone, de bore ou de matériaux céramiques d'au plus 1 cm de longueur et de rapport longueur/diamètre d'au moins 10, et sont incorporées audit matériau thermoplastique en une proportion de 5 à 40 % en poids.

4. Procédé selon l'une des revendications 1 à 3, caractérisé en ce que le rapport entre le rayon intérieur $R_{is}$ de la section de sortie et le rayon extérieur $R_{ee}$ de la section d'entrée de ladite zone divergente est d'au moins 1, l'angle $\theta$ formé par la direction de l'axe de la filière avec la direction d'écoulement du matériau dans la zone divergente est de 60 à 90°.

5. Procédé selon l'une des revendications 1 à 4, caractérisé en ce que le rapport entre la longueur l du bord intérieur de l'espace annulaire de sortie de la zone divergente et la largeur e de la section droite dudit espace est inférieur à 1,5.

6. Procédé selon l'une des revendications 1 à 5, caractérisée en ce que ladite substance liquide est mise en jeu en une proportion de 0,01 à 2,5 $cm^3$ pour 100 g dudit matériau thermoplastique.

7. Procédé selon la revendication 6, caractérisé en ce que ladite proportion ne dépasse pas 1,5 $cm^3$ pour 100 g.

8. Procédé selon l'une des revendications 1 à 7, caractérisé en ce que ladite substance liquide consiste en un polyéthylèneglycol de masse moléculaire moyenne de 400 à 10 000.

9. Procédé selon l'une des revendications 1 à 8, caractérisé en ce que ledit lubrifiant est introduit en mélange avec le matériau thermoplastique à extruder lors de l'alimentation de l'extrudeuse.

10. Procédé selon l'une des revendications 1 à 8, caractérisé en ce que, à la jonction entre la filière et la zone terminale divergente, ledit lubrifiant est acheminé d'une part vers la paroi extérieure de l'espace d'écoulement du matériau thermoplastique par un perçage 3 relié à un canal de répartition 4 qui comporte une fuite 5 débouchant sur ladite paroi extérieure et d'autre part vers la paroi intérieure dudit espace d'écoulement du matériau thermoplastique par le canal axial 6 prévu par ailleurs pour maintenir l'intérieur des tubes extrudés à la pression atmosphérique, ledit canal 6 étant relié à un canal de répartition 7 qui comporte une fuite 8 débouchant sur ladite paroi intérieure.

**11.** Appareillage pour mettre en oeuvre un procédé selon la revendication 9, consistant en un élément divergent adaptable sur une filière d'extrudeuse et comprenant un espace d'écoulement divergent dont la section annulaire d'entrée a une aire $A_e$ et la section annulaire de sortie a une aire $A_s$, caractérisé en ce que le rapport des aires $A_s/A_e$ est d'au moins 1,2, en ce que le rapport entre la longueur I du bord intérieur de l'espace annulaire de sortie de la zone divergente et la largeur e de la section droite dudit espace est inférieure à 5, et en ce que ledit élément divergent présente, pour l'acheminement dudit lubrifiant vers la paroi extérieure dudit espace d'écoulement, un perçage 3 relié à un canal de répartition 4 qui comporte une fuite 5 débouchant sur ladite paroi extérieure et, pour l'acheminement dudit lubrifiant vers la paroi intérieure dudit espace d'écoulement un canal axial 6 relié à un canal de répartition 7 qui comporte une fuite 8 débouchant sur ladite paroi intérieure.

**12.** Elément divergent selon la revendication 11, caractérisé en ce que le rapport entre la longueur I du bord intérieur de l'espace annulaire de sortie de la zone divergente et la largeur e de la section droite dudit espace est inférieure à 1,5.

**13.** Elément divergent selon l'une des revendications 11 et 12, caractérisé en ce que lesdites fuites 5 et 8 sont ménagées à la surface dudit élément divergent en contact avec la surface extérieure de la filière.

**14.** Appareillage constitué par une filière sur laquelle est adapté un élément divergent selon l'une des revendications 11 à 13.

**15.** Appareillage constitué par une extrudeuse comportant une filière selon la revendication 14.

## Claims

**1.** A process for the manufacture of tubes by extrusion of a thermoplastics material charged with discontinuous fibres through a drawplate consisting of a diverging end zone, characterised in that said end zone has a diverging annular flow space which has an As/Ae ratio of at least 1.2 between its exit area $A_s$ and its entry area $A_e$, and a ratio between the length 1 of the inner edge of the annular exit space of the diverging zone and the width e of the straight section of said bottom space which is less than 5, and in that flow of said thermoplastics material through said diverging end zone is effected in the presence of at least one lubricant consisting of a liquid substance of low viscosity and incompatible with said thermoplastics material at temperatures employed during the extrusion operation, said lubricant being present at the level of the outer wall and at the level of the inner wall of said flow space.

**2.** A process according to Claim 1, wherein said thermoplastics material is selected in the group formed by polyethylenes, polypropylenes, polyvinylchloride, polyamides, poly 1,4-butanediol terephthalate, polyethyleneglycol terephthalate, polyvinylidenefluoride and rubbers.

**3.** A process according to one of Claims 1 and 2, wherein the fibres are selected in the group formed by aromatic polyamide, carbon, boron or ceramics glass fibres which are 1 cm in length and wherein the length/diameter ratio is at least 10, the fibres being incorporated into said thermoplastics material in a proportion of 5 to 40 % by weight.

**4.** A process according to one of Claims 1 to 3, characterised in that the ratio between the internal radius $R_{is}$ of the exit section and the external radius $R_{ee}$ of the entry section of said diverging zone is at least 1, the angle $\theta$ formed by the path of the axis of the drawplate with the flow path of the material in the diverging zone being 60 to 90°.

**5.** A process according to one of Claims 1 to 4, characterised in that the ratio between the length I of the internal edge of the annular exit space of the diverging zone and the width e of the straight section of said space is less than 1.5.

**6.** A process according to one of Claims 1 to 5, characterised in that said liquid substance is used in a proportion of 0.01 to 2.5 $cm^3$ for 100 g of said thermoplastics material.

**7.** A process according to Claim 6, characterised in that said proportion does not exceed 1.5 $cm^3$ for 100 g.

8. A process according to one of Claims 1 to 7, characterised in that said liquid substance consists of a polyethyleneglyol with a mean molecular mass of 400 to 10 000.

9. A process according to one of Claims 1 to 8, characterised in that said lubricant is introduced in mixture with the thermoplastics material to be extruded during supply to the extruder.

10. A process according to one of Claims 1 to 8, characterised in that at the junction between the drawplate and the diverging end zone, said lubricant is directed firstly towards the external wall of the flow space for the thermoplastics material through a bore 3 which communicates with a distribution channel 4 which has an escape 5 opening out onto said external wall, and is directed secondly towards the internal wall of said flow space for the thermoplastics material via the axial channel 6 provided for the other purpose of keeping the insides of the extruded tubes at atmospheric pressure, said channel 6 communicating with a distribution channel 7 which has an escape 8 which opens out onto said internal wall.

11. An apparatus for carrying out a process according to Claim 9, consisting of a diverging element which can be fitted on an extruder drawplate, and consisting of a diverging flow space, the annular entry section of which has an area $A_e$, and the annular exit section of which has an area $A_s$, characterised in that the ratio of the surface areas $A_s/A_e$ is at least 1.2, in that the ratio between the length l of the internal edge of the annular exit space of the diverging zone and the width e of the straight section of said space is less than 5, and in that for the purpose of directing said lubricant towards the external wall of said flow space, said diverging element has a bore 3 communicating with a distribution channel 4 which has an escape 5 which opens out onto said external wall, and, for the purpose of directing said lubricant towards the internal wall of said flow space, has an axial channel 6 communicating with a distribution channel 7 which has an escape 8 opening out over said internal wall.

12. A diverging element according to Claim 11, characterised in that the ratio between the length l of the internal edge of the annular exit space of the diverging zone and the width e of the straight section of said space is less than 1.5.

13. A diverging element according to one of Claims 11 and 12, characterised in that said escapes 5 and 8 are arranged at the surface of said diverging element in contact with the external surface of the drawplate.

14. An apparatus constituted of a drawplate on which is fitted a diverging element according to one of Claims 11 to 13.

15. An apparatus constituted of an extruder which has a drawplate according to Claim 14.

**Patentansprüche**

1. Verfahren zum Herstellen von Rohren durch Extrusion eines thermoplastischen mit diskontinuierlichen Fasern gefüllten Materials durch eine eine divergente Endzone umfassende Düse, dadurch gekennzeichnet, daß diese Endzone einen divergenten Strömungsringraum umfaßt, der ein Verhältnis As/Ae von wenigstens 1,2 zwischen seiner Austrittsfläche $A_s$ und seiner Eintrittsfläche $A_e$ und ein Verhältnis zwischen der Länge l des inneren Randes des Austrittsringraums der divergenten Zone und der Breite e des geraden Querschnitts dieses Raumes kleiner als 5 hat, und daß der Durchgang dieses thermoplastischen Materials durch diese divergente Endzone realisiert wird in Anwesenheit wenigstens eines Schmiermittels, das aus einer flüssigen Substanz geringer Viskosität, die nicht kompatibel mit dem thermoplastischen Material bei während der Extrusion auftretenden Temperaturen ist, wobei das Schmiermittel auf der Ebene der Außenwand und auf der Ebene der Innenwand dieses Strömungsringraums oder insgesamt auf diesen vorgesehen ist.

2. Verfahren nach Anspruch 1, bei dem dieses thermoplastische Material gewählt ist aus der Gruppe, die gebildet wird durch die Polyethylene, die Polypropylene, das Poly(vinylchlorid), die Polyamide, das 1,4-Butandiol(poly)terephtalat, das Ethylenglycol(poly)terephtalat, das Poly(vinylidenfluorid) sowie die Kautschuke.

3. Verfahren nach einem der Ansprüche 1 und 2, bei dem die Fasern gewählt sind aus der Gruppe, die gebildet ist durch die Glasfasern, aromatische Polyamide, Kohlenstoff, Bor oder keramische Materialien mit mehr als 1 cm Länge und einem Längen/Durchmesserverhältnis von wenigstens 10 und in dieses thermoplastische Material in einem Anteil von 5 bis 40 Gw% eingebaut sind.

4. Verfahren nach einem der Ansprüche 1 bis 3, dadurch gekennzeichnet, daß das Verhältnis zwischen dem Innenradius $R_{is}$ des Austrittsquerschnitts und dem Außenradius $R_{ee}$ des Eintrittsquerschnitts dieser divergenten Zone wenigstens 1 ist, wobei der Winkel $\theta$, der durch die Richtung der Achse der Düse mit der Strömungsrichtung des Materials in der divergenten Zone gebildet ist, 60 bis 90° beträgt.

5. Verfahren nach einem der Ansprüche 1 bis 4, dadurch gekennzeichnet, daß das Verhältnis zwischen der Länge l des Innenrandes des Austrittsringraums der divergenten Zone und der Breite e des geraden Querschnitts dieses Raums kleiner als 1,5 ist.

6. Verfahren nach einem der Ansprüche 1 bis 5, dadurch gekennzeichnet, daß diese flüssige Substanz in einem Anteil von 0,01 bis 1,5 cm$^3$ für 100 g dieses thermoplastischen Materials eingesetzt wird.

7. Verfahren nach Anspruch 6, dadurch gekennzeichnet, daß dieser Anteil 1,5 cm$^3$ pro 100 g nicht überschreitet.

8. Verfahren nach einem der Ansprüche 1 bis 7, dadurch gekennzeichnet, daß diese flüssige Substanz aus Polyethylenglycol einer mittleren molaren Masse von 400 bis 10 000 besteht.

9. Verfahren nach einem der Ansprüche 1 bis 8, dadurch gekennzeichnet, daß diese Schmiermittel im Gemisch mit dem thermoplastischen zu extrudierenden Material bei der Speisung des Extruders eingeführt wird.

10. Verfahren nach einem der Ansprüche 1 bis 8, dadurch gekennzeichnet, daß am Übergang zwischen der Düse und der divergenten Endzone diese Schmiermittel einerseits gegen die Außenwandung des Strömungsraums für das thermoplastische Material über eine Bohrung 3 geführt wird, die mit einem Verteilerkanal 4 verbunden ist, der einen Austritt 5 umfaßt, der gegen diese Außenwandung und andererseits gegen die Innenwand dieses Strömungsraums des thermoplastischen Materials über den Axialkanal 6 mündet, der im übrigen vorgesehen ist, um das Innere der extrudierten Rohre bei atmosphärischem Druck zu halten, wobei dieser Kanal 6 mit einem Verteilerkanal 7 verbunden ist, der einen gegen diese Innenwand mündenden Austritt 8 umfaßt.

11. Vorrichtung zur Durchführung des Verfahrens nach Anspruch 9, aus einem divergenten an eine Extruderdüse anpaßbaren Element bestehend und einen divergenten Strömungsraum umfassend, dessen Ringeintrittsquerschnitt eine Fläche $A_e$ und der Ringaustrittsquerschnitt eine Fläche $A_s$ hat, dadurch gekennzeichnet, daß das Verhältnis der Flächen $A_s/A_e$ wenigstens 1,2 beträgt, daß das Verhältnis zwischen der Länge l des Innenrandes des Austrittsringraums der divergenten Zone und der Breite e des geraden Querschnitts dieses Raums kleiner als 5 ist und daß dieses divergente Element zum Führen des Schmiermittels gegen die Außenwand dieses Strömungsraums eine mit einem Verteilerkanal 4 verbundene Bohrung 3 hat, die einen Austritt 5 umfaßt, der gegen diese Außenwandung mündet und zum Führen dieses Schmiermittels gegen die Innenwand dieses Strömungsraums einen Axialkanal 6 hat, der mit einem Verteilerkanal 7 verbunden ist, der einen gegen diese Innenwand mündenden Austritt 8 hat.

12. Divergentes Element nach Anspruch 11, dadurch gekennzeichnet, daß das Verhältnis zwischen der Länge l des Innenrands des Austrittsringraums der divergenten Zone und der Breite e des geraden Querschnitts dieses Raums kleiner als 1,5 ist.

13. Divergentes Element nach einem der Ansprüche 11 und 12, dadurch gekennzeichnet, daß diese Austritte 5 und 8 an der Oberfläche dieses divergierenden Elements in Kontakt mit der Außenfläche der Düse vorgesehen sind.

14. Vorrichtung gebildet durch eine Düse, an die ein divergierendes Element gemäß einem der Ansprüche 11 bis 13 angepaßt ist.

**15.** Vorrichtung gebildet durch einen Extruder mit einer Düse gemäß Anspruch 14.

EP 0 503 364 B1

**FIG.1A**

**FIG.1**

**FIG.2**

**FIG.3**

**FIG.4A**

**FIG.4**

16